# EUROPEAN PATENT SPECIFICATION

(11) **EP 2 103 866 B1**
(45) Date of publication and mention of the grant of the patent: **11.04.2018**
(21) Application number: 09250374.7
(22) Date of filing: 13.02.2009
(51) Int. Cl.: F21S 8/10, F21S 8/12, B60Q 1/28, B60Q 1/30

(54) **Vehicle light**
Fahrzeuglicht
Phare de véhicule

(30) Priority: 19.03.2008 JP 2008071333
(43) Date of publication of application: 23.09.2009
(73) Proprietor: Honda Motor Co., Ltd., Minato-ku Tokyo 107-8556 (JP)
(72) Inventor: Komiya, Koji, Wako-shi Saitama, 351-0193 (JP); Katayama, Mutsumi, Wako-shi Saitama, 351-0193 (JP)
(74) Representative: Stevens, Jason Paul

(56) References cited:
- EP-A2- 1 033 525
- EP-A2- 1 099 601
- EP-A2- 1 588 895
- EP-A2- 1 762 433
- WO-A1-03/021146
- GB-A- 2 283 821
- US-A- 4 951 179
- US-A- 5 325 271
- US-A1- 2002 085 389
- US-A1- 2002 135 208
- US-A1- 2004 105 274
- US-A1- 2004 208 013
- US-A1- 2006 256 573

## Description

The present invention relates to a vehicle light, and particularly relates to a vehicle light capable of maintaining viewability even when seen from a diagonal direction having a predetermined angle to a direction of radiation of the light.

Heretofore, various structures have been studied in order to improve viewability of lights to be attached to vehicles such as motorcycles which emit light to an occupant of another vehicle, a pedestrian and the like, and also to improve the appearance design of the light and to reduce the manufacturing cost thereof. Examples of such lights are dislosed in EP 1762433, US 5325271 and EP 1033525.

Japanese Patent Application Publication No. 2000-331509 discloses a vehicle light in which the number of light-emitting diodes is made to appear to be greater than the actual number, by arranging multiple reflective surfaces in the circumference of a light source attachment surface to which the light-emitting diodes serving as light sources are attached.

When a viewer such as an occupant of another vehicle or a pedestrian sees a light attached to a vehicle, the viewer likely sees the light from a direction other than the front even if the direction of radiation of the light is from the front side of the vehicle body. For example, when a light attached to the front of the vehicle body of a moving vehicle is seen by an occupant of another vehicle moving in the opposite lane, an angle of the light with respect to the direction of the eyes of the occupant of another vehicle, who is looking straight ahead, sequentially changes. Specifically, as the distance between the two vehicles decreases, such an angle changes from approximately zero degrees (when the two vehicles are sufficiently distant) to approximately 90 degrees (when the two vehicles pass each other). Meanwhile, when a pedestrian sees the light attached to the front of the vehicle body of a stationary vehicle, the direction of the eyes of the pedestrian looking at the light changes in accordance with the distance between the pedestrian and the vehicle. In this manner, the viewer likely sees the light of the vehicle from a diagonal direction having a predetermined angle to the radiation direction of the light. Thus, the light of the vehicle preferably has a configuration with which the viewability does not decrease even when seen diagonally.

Although the light described in Japanese Patent Application Publication No. 2000-331509 can make the number of light-emitting diodes appear to be greater than the actual number when seen from the front by arranging multiple reflective surfaces, how the light-emitting diodes are seen from a diagonal direction has not been taken into consideration in particular.

It is an object of at least the preferred embodiments of the present invention to provide a vehicle light which solves the problem of the conventional technique described above and which can maintain viewability of light even when seen from a diagonal direction having a predetermined angle to a direction of radiation of the light.

According to a first aspect of the present invention, there is provided a vehicle light comprising: a planar board in which a plurality of light sources are arranged in a matrix; the vehicle light further comprises planar wall portions which are arranged to project from edge surfaces of the board in a direction of radiation of the light sources to form a housing of constant cross-section surrounding the board; characterized in that at least one of the wall portions has a reflective surface on a side facing the light sources; wherein a second wall portion is arranged opposite the said at least one wall portion, and has a reflective surface on a side facing the light sources; and wherein the matrix of light sources and the planar wall portions are arranged such that when light from the light sources nearest to the second wall portion is prevented by the second wall portion from directly reaching an observer, light from the light sources nearest to the said at least one wall portion can be reflected from the said at least one wall portion to thereby reach the observer.

Thus, when the light is seen from a diagonal direction having a predetermined angle with respect to the direction of radiation direction of the light source, a reflected image of the light source is reflected from the reflective surface, whereby the number of the light sources appears to be greater than the actual number, thereby improving the viewability. Since the wall portion is used as the reflective surface, a reflective surface of a complex shape or the like does not need to be provided, and viewability of the light can be improved with a simple structure. Further, since the light sources with only one reflection by the reflective surface can be seen, there is less unevenness in the lighting and the product appearance is improved compared to a method by which the light sources are seen after multiple reflections.

In a preferred form, the light sources are arrayed in a matrix of m rows by N columns, and said reflective surfaces are formed of two horizontal surfaces which vertically face each other in a row direction of the matrix, and two vertical surfaces which horizontally face each other in a column direction of the matrix.

When the light is seen from a diagonal direction having a predetermined angle with respect to the radiation direction of the light source, a part of the light sources arrayed in the matrix is reflected on the reflective surface as reflected images. Accordingly,
even when the light is seen diagonally from an angle where a part of the light sources is blocked by the wall portion and cannot be seen, the reflected images of other light sources can be seen instead, whereby light sources of the same number as that when seen from the front can be seen.

Preferably, when the light sources in each row are arranged at equal intervals each having a distance D1 and when a distance between each of the light sources at both row ends and the reflective surface adjacent thereto is a distance D2, the distance D2 is set to not less than (1/3) × D1 and not more than (2/3) × D1.

Thus, when the light is seen from a diagonal direction on the left or right having a predetermined angle with respect to the direction of radiation of the light source, the distance between the actual image of the light source at the row end and the reflected image of the actual image can approximate the distance D1. Accordingly, when the light is seen diagonally and the actual images and the reflected images of the light sources are seen, it appears as though the light sources were arranged at equal intervals throughout the entire row, whereby the viewer does not feel a sense of incongruity.

It is further preferred that when the light sources in each column are arranged at equal intervals each having a distance S1 and when a distance between each of the light sources at both column ends and the reflective surface adjacent thereto is a distance S2, the distance S2 is set to not less than (1/3) × S1 and not more than (2/3) × S1.

Thus, when the light is seen from a diagonal direction having a predetermined angle with respect to the radiation direction of the light source, the distance between the actual image of the light source at the column end and the reflected image of the actual image can approximate the distance S1. Accordingly, when the light is seen diagonally and the actual images and the reflected images of the light sources are seen, it appears as though the light sources were arranged at equal intervals throughout the entire column, whereby the viewer does not feel a sense of incongruity.

In a further preferred form, when the light sources in each row are arranged at equal intervals each having a distance D1 and when a distance between each of the light sources at both column ends and the reflective surface adjacent thereto is a distance S2, the distance S2 is set to not less than (1/3) × D1 and not more than (2/3) × D1.

Then, when the light is seen from a diagonal direction having a predetermined angle with respect to the radiation direction of the light source, the distance between the actual image of the light source at the column end and the reflected image of the actual image can approximate the distance D1. Accordingly, when the light is seen diagonally and the actual images and the reflected images of the light sources are seen, it appears as though the light sources were arranged at equal intervals throughout the entire column, whereby the viewer does not feel a sense of incongruity.

It is further preferred that when the light sources in each column are arranged at equal intervals each having a distance S1 and when a distance between each of the light sources at both row ends and the reflective surface adjacent thereto is a distance D2, the distance D2 is set to not less than (1/3) × S1 and not more than (2/3) × S1.

Thus, when the light is seen from a diagonal direction having a predetermined angle with respect to the radiation direction of the light source, the distance between the actual image of the light source at the row end and the reflected image of the actual image can approximate the distance S1. Accordingly, when the light is seen diagonally and the actual images and the reflected images of the light sources are seen, it appears as though the light sources were arranged at equal intervals throughout the entire row, whereby the viewer does not feel a sense of incongruity.

The distance between an edge of the reflective surface of one of the vertical surfaces and the light sources may differ from a distance between an edge of the reflective surface of the other one of the vertical surfaces and the light sources. Then, how the light is seen diagonally from the front left or right can be made to differ between the left and right.

The board may be arranged to be inclined with respect to the two vertical surfaces. Thus, how the light is seen diagonally from the front left or right can be made to differ between the left and right. Particularly, when seen from one side of the left or right at a predetermined angle, the light can be configured such that the number of light sources may appear to be greater than the actual number.

In a preferred form, four planar wall portions are provided to surround the board; the light sources are arranged in a matrix of one row by N columns, the reflective surfaces are formed of two horizontal surfaces which vertically face each other in a row direction of the matrix and two vertical surfaces which horizontally face each other in a column direction of the matrix, the board is arranged to be substantially orthogonal to the reflective surfaces, and when a distance between an edge of an upper one of the horizontal reflective surfaces and the light sources is a distance h5, when a distance between an edge of a lower one of the horizontal reflective surfaces and the light sources is a distance h6, when a distance between the upper reflective surface and the light sources is a distance S3, and when a distance between the lower reflective surface and the light sources is a distance S4, the distance h6 is set to not less than S3 and h5, the horizontal reflective surfaces vertically facing each other.

Thus, when looked down diagonally from above at a predetermined angle with respect to the radiation direction of the light source, the light can be configured such that the actual image and the reflected image of the actual image of the light source can be seen simultaneously. Accordingly, when the light is looked down on diagonally from above, the number of the light sources appears to be greater than the actual number, and viewability of the light can be improved.

Preferably, the distance h5 is set to not more than S3 × (√3), and the distance h6 is set to not less than S4 × (√3). Then, when looked down from above at an angle of 30 degrees with respect to the radiation direction of the light source, the light can be configured such that the actual image and the reflected image of the actual image of the light source can be seen simultaneously. Accordingly, the number of the light sources appears to be greater than the actual number, and viewability of the light can be improved. Also, the light can be configured such that the actual image and the reflected image of the actual image of the light source can be seen simultaneously while minimizing the length from the edge of the reflective surface to the light source.

Preferred embodiments of the invention will now be described by way of example only and with reference to the accompanying Figures, in which:
Fig. 1 is a side view of a motorcycle on which a light according to an embodiment of the present invention is mounted;
Fig. 2 is a perspective view of a light according to a first embodiment of the present invention;
Fig. 3 is a front view of the light;
Fig. 4 is a sectional view taken along the line A-A of Fig. 3;
Fig. 5 is an illustrative view showing a state where an angle formed by the light and a viewpoint of a viewer is a predetermined angle θ2 greater than an angle θ1;
Fig. 6 is a perspective view showing how the light is seen diagonally from the front right;
Fig. 7 is a perspective view showing how the light is seen diagonally from above;
Fig. 8 is a front view of a light according to a first modified example of the first embodiment of the present invention;
Fig. 9 is a sectional view taken along the line B-B of Fig. 8;
Fig. 10 is an illustrative view showing a state where the angle formed by the light and the viewpoint of the viewer is an angle θ4 greater than an angle θ3;
Fig. 11 is a front view of a light according to a second modified example of the first embodiment of the present invention;
Fig. 12 is a sectional view taken along the line C-C of Fig. 11;
Fig. 13 is a perspective view of a light according to a second embodiment of the present invention;
Fig. 14 is a front view of the light;
Fig. 15 is a sectional view taken along the line D-D of Fig. 14;
Fig. 16 is a perspective view showing how the light is seen from a position diagonally above where the angle formed by the light and the viewpoint of the viewer is an angle θ6;
Fig. 17 is a perspective view showing how the light is seen from a position where the angle formed by the light and the viewpoint of the viewer is greater than the angle θ6; and
Fig. 18 is a front view of a motorcycle to which a light according to an embodiment of the present invention is mounted.

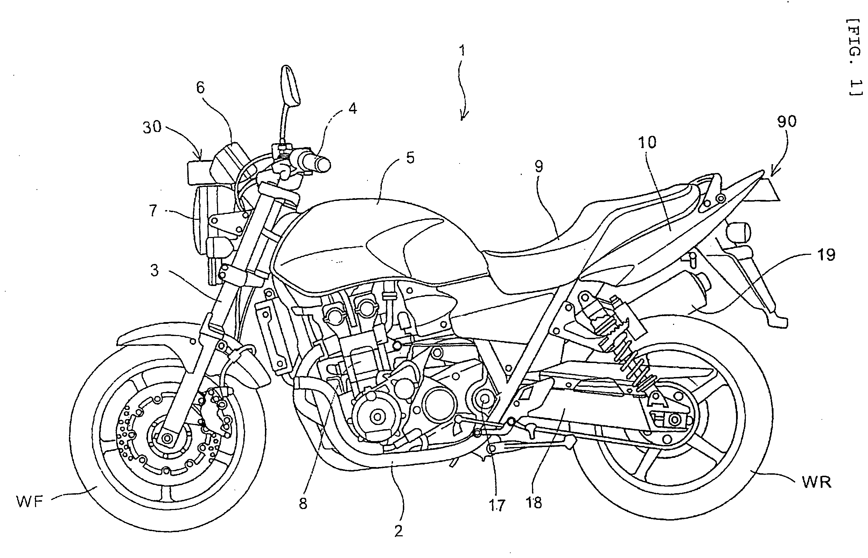

Fig. 1 is a side view of a motorcycle 1 on which is mounted a light 30 according to a first embodiment of the present invention and a light 90 according to a second embodiment of the present invention. On the front side of the vehicle body of a vehicle body frame 2, a pair of left and right front forks 3, which pivotally support a front wheel WF to be rotatable, are attached so as to be steerable by a steering handle 4. On the front side of the steering handle 4, a meter unit 6 and a headlight 7 are attached, and the light 30 is attached therebetween. The light 30 functions as a signal lamp for notifying a viewer, such as an occupant of another vehicle or a pedestrian, of the presence of the motorcycle 1 by radiating light from a light source such as a light-emitting diode. Note that one light 30 is provided in the widthwise centre of the vehicle direction in the example shown in the drawing, but two or more thereof may be provided by attaching a pair at the left and right sides of the vehicle.

An engine 8 serving as a driving source of the motorcycle 1 is suspended in the vehicle body frame 2, and a fuel tank 5 is arranged above the engine 8. On a lower rear portion of the vehicle body frame 2, a swing arm pivot 17 is provided to pivotally support one end of a swing arm 18 so as to be swingable. In turn, the swing arm 18 pivotally supports a rear wheel WR, which serves as a drive wheel, so as to be rotatable by the engine. On the rear side of the vehicle body of the fuel tank 5, an occupant seat 9 is attached, and a seat cowl 10 as an external part is arranged below the occupant seat 9. Exhaust gas from the engine 8 is discharged from a muffler 19 via a discharge pipe extending to the rear side of the vehicle body.

The light 90 is attached to an upper portion of a tail lamp device (not shown) at a rear end of the seat cowl 10. In the same manner as the light 30 on the front side of the vehicle body, the light 90 also functions as a signal lamp for notifying an occupant of another vehicle, a pedestrian, and the like of the presence of the motorcycle 1, and one or more may be provided, radiating light from the rear side of the vehicle body.

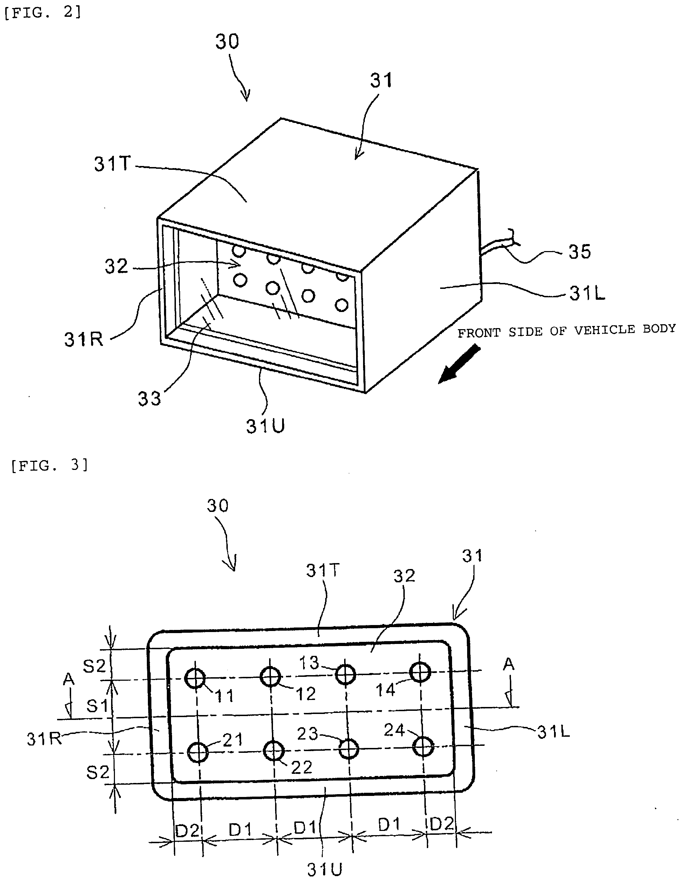

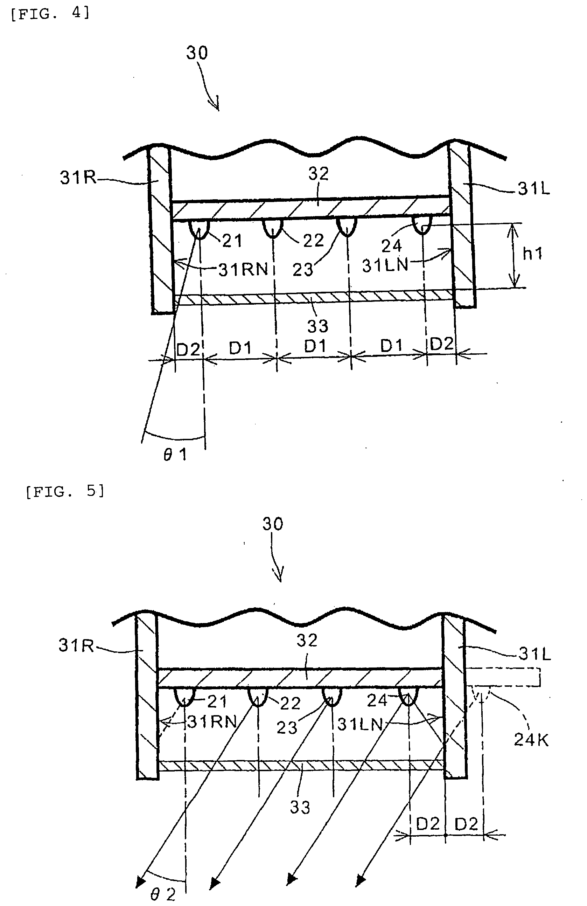

Fig. 2 is a perspective view of a light 30 according to the first embodiment of the present invention. Fig. 3 is a front view of the light 30, and Fig. 4 is a sectional view taken along the line A-A of Fig. 3.

The light 30 is configured such that a board 32 having multiple light sources arranged therein is held in a housing 31 formed of plates of resin (plastic) or the like. In this embodiment, a light-emitting diode (LED) is used as the light source, but it may be configured as an incandescent light bulb or the like. Moreover, the colour, intensity or directivity of the radiated light of the light source can be desirably changed in accordance with the application or the like of the light.

The housing 31 is formed of an upper side wall portion 31T, a lower side wall portion 31U, a left side wall portion 31L, a right side wall portion 31R, and a rear side wall portion (not shown), which are provided to surround the four sides of the board 32. The upper side wall portion 31T and the lower side wall portion 31U form two horizontal surfaces facing each other vertically, and the left side wall portion 31L and the right side wall portion 31R form two vertical surfaces facing each other horizontally, thereby forming a box shape with one surface of a rectangular solid being removed to provide an opening.

On the front side of the vehicle body of the housing 31, i.e., in the opening provided in the direction of radiation of the light source, a cover lens 33 which prevents moisture, dust, and the like from entering into the housing 31 is attached. The cover lens 33 is formed of a colourless or coloured transparent resin plate or the like, and causes the radiated light of the light source to be transmitted without being bent appreciably. In this embodiment, the board 32 is arranged orthogonal to the four walls, and a distance between each light source and the cover lens 33 is h1. On the rear side wall portion of the housing 31, a wire 35 which supplies a power supply to the light sources is attached.

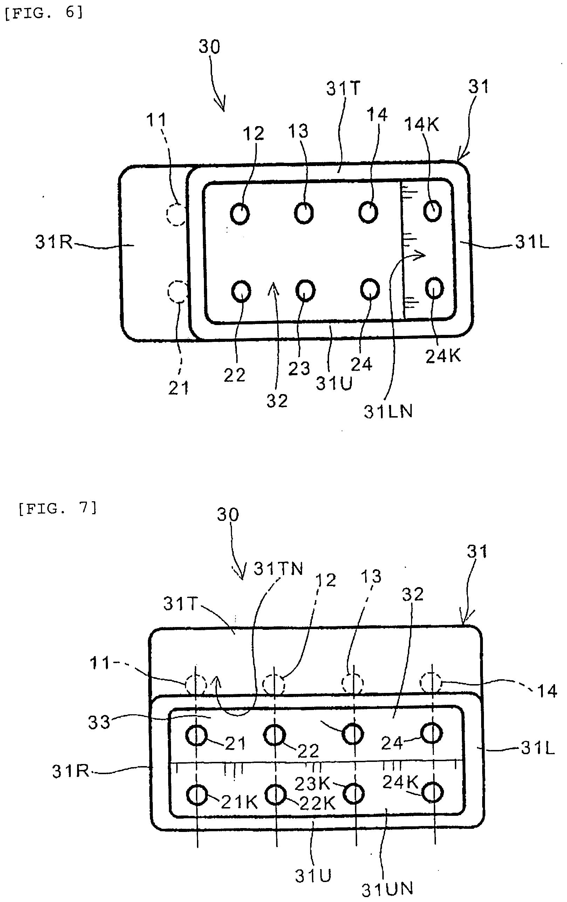

An aspect of the light 30 according to this embodiment is that, in the four wall portions 31T, 31U, 31L, and 31R, inner wall surfaces of parts projecting in the direction of radiation of the light sources from the edge surfaces of the board 32, i.e., surfaces on the light source side, are reflective surfaces 31TN, 31UN, 31LN, and 31RN (see Figs. 4 and 7) which can reflect light. The reflective surfaces are preferably mirror-finished by a method such as plating or metal deposition.

In the board 32, light sources 11, 12, 13, 14, 21, 22, 23, and 24 comprising a total of eight light-emitting diodes are arrayed in a matrix of two rows by four columns. The light sources in the same row are arranged at equal intervals each having a distance D1, and a distance between each light source at the ends of the row and its adjacent reflective surface is a distance D2. Meanwhile, the light sources in the same column are arranged at intervals of a distance S1, and a distance between each light source at the ends of the column and its adjacent reflective surface is a distance S2.

When seen from the front of the vehicle, the light 30 appears as shown in Fig. 3. However, when seen from a diagonal direction on the left or right while moving in the horizontal direction from the front of the vehicle, the light sources at the column ends are blocked by the wall portions and cannot be seen directly at a point where the angle exceeds a certain degree. Fig. 4 shows a case where the light sources 11 and 21 at the column ends on the left side in the drawing are blocked by the right side wall portion 31R and cannot be seen, when an angle formed by the light 30 and the viewpoint of a viewer exceeds an angle θ1.

Fig. 5 is an illustrative view showing a state where the angle formed by the light 30 and the viewpoint of the viewer is a predetermined angle θ2 greater than the angle θ1. Fig. 6 is a perspective view showing how the light 30 is seen diagonally from a front right position at the predetermined angle θ2. In this case, the light sources 11 and 21 at the column ends on the left side in the drawing are hidden by the right side wall portion 31R and cannot be seen. However, reflected images 14K and 24K can be seen, as a result of the light sources 14 and 24 at the column ends on the right side in the drawing being reflected on the reflective surface 31LN of the left side wall portion 31L. Thereby, it appears to the viewer of the light 30 as though the number of the light sources was eight, which is the same as the number of light sources that arranged in the board. The drawing shows an example of a case where the light 30 is seen diagonally from the front right, but the same applies when seen diagonally from the front left.

At this time, if the distance D2 is set to a length of one half (1/2) of the distance D1, the distance between the light source 14 and the reflected image 14K (distance between the light source 24 and the reflected image 24K) can approximate the distance D1. In this embodiment, by setting the distance D2 to be (1/3) × D1 or greater and (2/3) × D1 or less, it can appear as though the light sources are arranged at equal intervals throughout the entire row even when the viewer sees the light 30 diagonally from the front. Accordingly, the viewer is prevented from feeling a sense of incongruity.

Note that, in a state where the angle formed by the light 30 and the viewpoint of the viewer does not exceed the angle θ1, the reflective surface 31LN almost cannot be seen from the viewer. Thus, even if the radiated light of the light sources 14 and 24 is reflected by the reflective surface 31LN, it cannot be seen by the viewer.

Fig. 7 is a perspective view showing how the light 30 is seen diagonally from the front and above in such a way that the light 30 and the viewpoint of the viewer form a predetermined angle. In this case, the light sources 11, 12, 13, and 14 of the row on the upper side in the drawing are hidden by the upper side wall portion 31T and cannot be seen directly. However, reflected images 21K, 22K, 23K, and 24K can be seen as a result of the light sources 21, 22, 23, and 24 of the row on the lower side in the drawing being reflected on the reflective surface 31UN of the lower side wall portion 31U. Thereby, it appears to the viewer of the light 30 as though the number of the light sources is eight, which is the same number as that arranged in the board. This way of appearance also applies in the same manner when the light 30 is seen diagonally from below.

At this time, if the distance S2 is set to a length of one half (1/2) of the distance S1, the distance between the light source 21 and the reflected image 21K (the same applies for other light sources) can approximate the distance S1. In this embodiment, by setting the distance S2 to be (1/3) × S1 or greater and (2/3) × S1 or less, it can appear to the viewer as though the light sources are arranged at equal intervals throughout the entire column even when the viewer sees the light 30 diagonally from above. Accordingly, the viewer is prevented from feeling a sense of incongruity.

Note that, even if the number of light sources arranged in the board 32 is increased, e.g., a matrix of 3 rows by 5 columns is formed, the ways of appearance of the actual image of the light source at the column end and the reflected image thereof and the ways of appearance of the actual image of the light source at the row end and the reflected image thereof do not change.

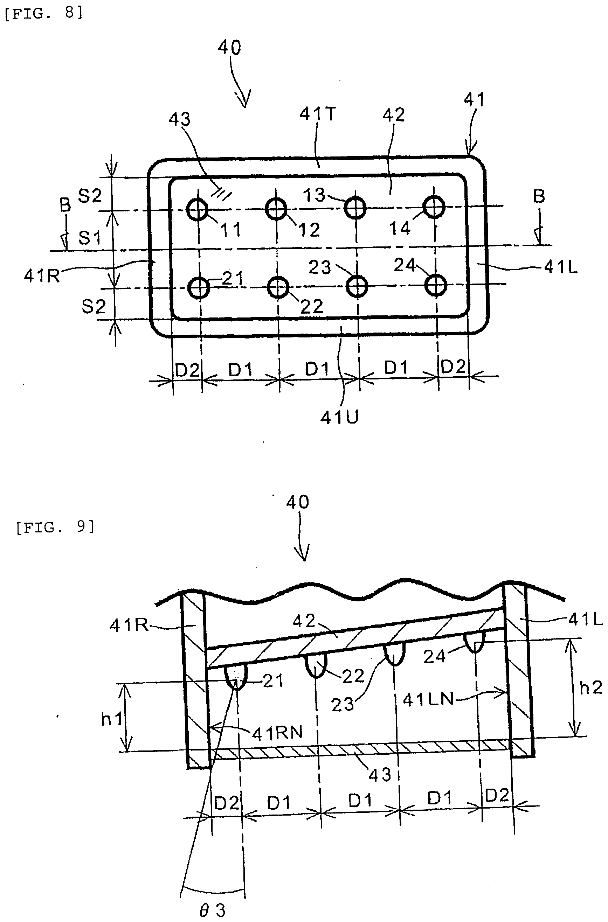

Fig. 8 is a front view of a light 40 according to a first modified example of the first embodiment of the present invention. Fig. 9 is a sectional view taken along the line B-B of Fig. 8. The same reference numerals as those described above denote the same or equivalent parts.

The shapes and the like of wall portions 41T, 41U, 41L, and 41R forming a housing 41, reflective surfaces formed in the respective four wall portions, and a cover lens 43 are the same as those of the light 30 of the first embodiment. However, in this modified example, a board 42 is attached to be inclined with respect to the right side wall portion 41R and the left side wall portion 41L. Accordingly, a distance h2 between the light source 14 or 24 and the cover lens 43 is greater than a distance h1 between the light source 11 or 21 and the cover lens 43.

In this modified example, as shown in Fig. 9, the light sources 11 and 21 at the column ends on the left side in the drawing are blocked by the right side wall portion 41R and cannot be seen when an angle formed by the light 40 and the viewpoint of the viewer exceeds an angle θ3.

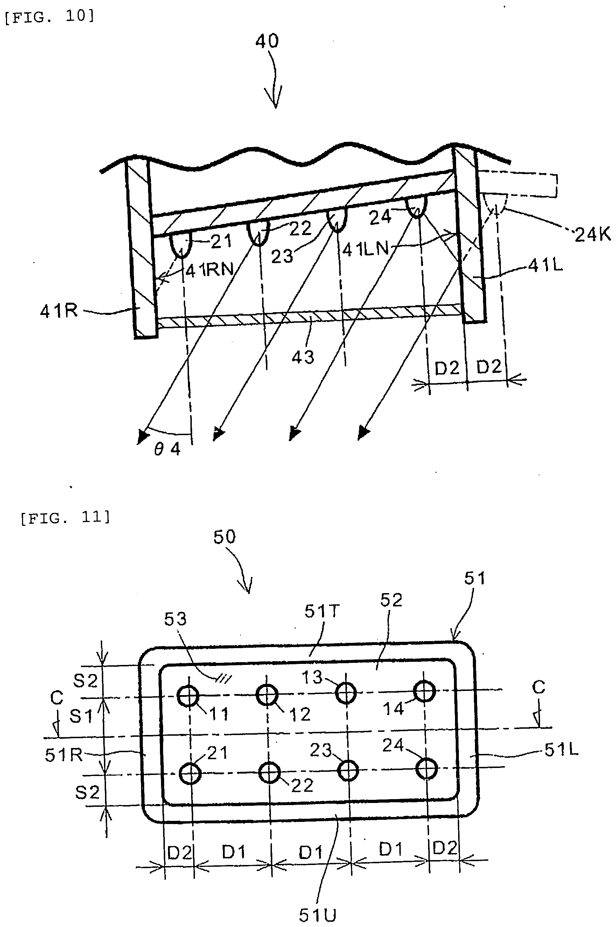

Fig. 10 is an illustrative view showing a state where the angle formed by the light 40 and the viewpoint of the viewer is an angle θ4 greater than the angle θ3. In this case, the light sources 11 and 21 at the column ends on the left side in the drawing are hidden by the right side wall portion 41R and cannot be seen directly. However, reflected images 14K and 24K can be seen as a result of the light sources 14 and 24 at the column ends on the right side in the drawing being reflected in a reflective surface 41LN of the left side wall portion 41L. Thus, it appears to the viewer of the light 40 as though the number of light sources is eight, which is the same number as that arranged in the board. In the same manner, when the light 40 is seen diagonally from the front left, the light sources 14 and 24 on the right side in the drawing are hidden by the left side wall portion 41L and cannot be seen, while reflected images 11K and 21K can be seen as a result of the light sources 11 and 21 on the left side in the drawing being reflected in a reflective surface 41RN of the right side wall portion 41R.

In this modified example, i.e., when the board 42 is arranged to be inclined with respect to the left side wall portion 41L and the right side wall portion 41R, it can also appear as though the light sources are arranged at equal intervals throughout the entire row when the light 40 is seen diagonally from the front left or right by setting a distance D2 to be (1/3) × D1 or greater and (2/3) × D1 or less. By setting a distance S2 to be (1/3) × S1 or greater and (2/3) × S1 or less, it can appear as though the light sources are arranged at equal intervals throughout the entire column when the light 40 is seen diagonally from the front and above or below.

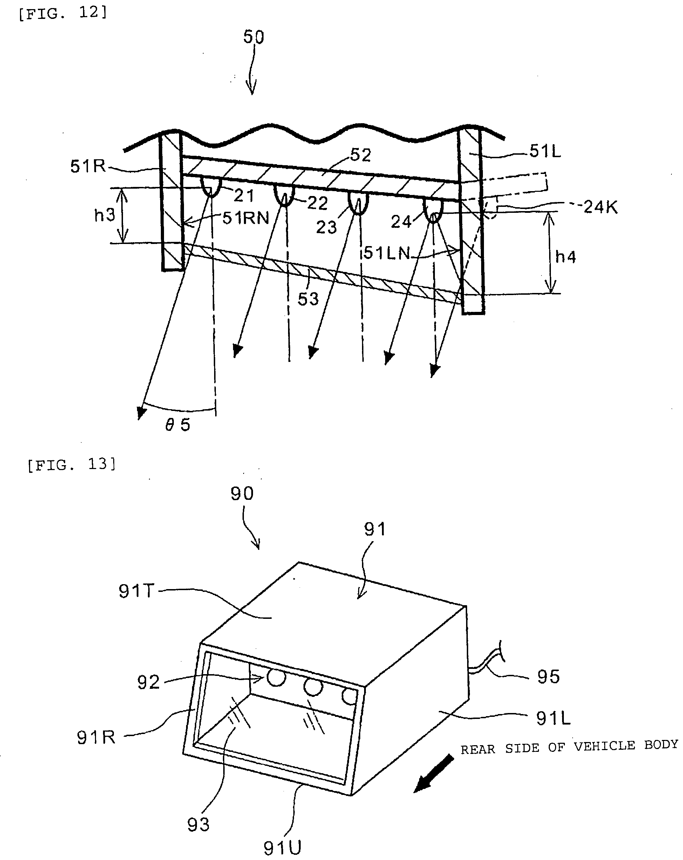

Fig. 11 is a front view of a light 50 according to a second modified example of the first embodiment of the present invention. Fig. 12 is a sectional view taken along the line C-C of Fig. 11. The same reference numerals as those described above denote the same or equivalent parts.

A housing 51 is formed of wall portions 51T, 51U, 51L, and 51R, and reflective surfaces are formed in the respective four wall portions. In this modified example, not only is a board 52 attached to be inclined with respect to the right side wall portion 51R and the left side wall portion 51L, but also a cover lens 53 is attached to be inclined with respect to the right side wall portion 51R and the left side wall portion 51L. Accordingly, a distance h4 between the light source 14 or 24 and the cover lens 53 is greater than a distance h3 between the light source 11 or 21 and the cover lens 53.

In this modified example, as shown in Fig. 12, the light sources 11 and 21 at the column ends on the left side in the drawing can still be seen when an angle formed by the light 50 and the viewpoint of the viewer has reached an angle θ5. However, at this point, reflected images 14K and 24K can be seen by the light sources 14 and 24 at the column ends on the right side in the drawing being reflected on a reflective surface 51LN of the left side wall portion 51L. Thereby, the viewer of the light 50 can view a total of 10 light sources which is greater than the number arranged in the board, and the viewability of the light 50 can further be improved.

Even in this modified example, i.e., with a configuration in which the board 52 and the cover lens 53 are arranged diagonally with respect to the left side wall portion 51L and the right side wall portion 51R, it can appear as though the light sources are arranged at equal intervals throughout the entire row when the light 50 is seen diagonally from the front left or right by setting a distance D2 to be (1/3) × D1 or greater and (2/3) × D1 or less. Also, it can appear as though the light sources are arranged at equal intervals throughout the entire column when the light 50 is seen diagonally from the front and above or below by setting a distance S2 to be (1/3) × S1 or greater and (2/3) × S1 or less. Note that it is particularly preferable to arrange the lights 50 to be horizontally symmetrical in the width direction of the vehicle, since the chances for the viewer to see a greater number of the light sources than the number arranged in the board are thereby increased.

Note that, in the first embodiment described above and the first and second modified examples of the first embodiment, it can appear as though the light sources were arranged at equal intervals throughout the entire row and column when the light is seen from diagonal directions by setting the distance S2 to be (1/3) × D1 or greater and (2/3) × D1 or less and setting the distance D2 to be (1/3) × S1 or greater and (2/3) × S1 or less.

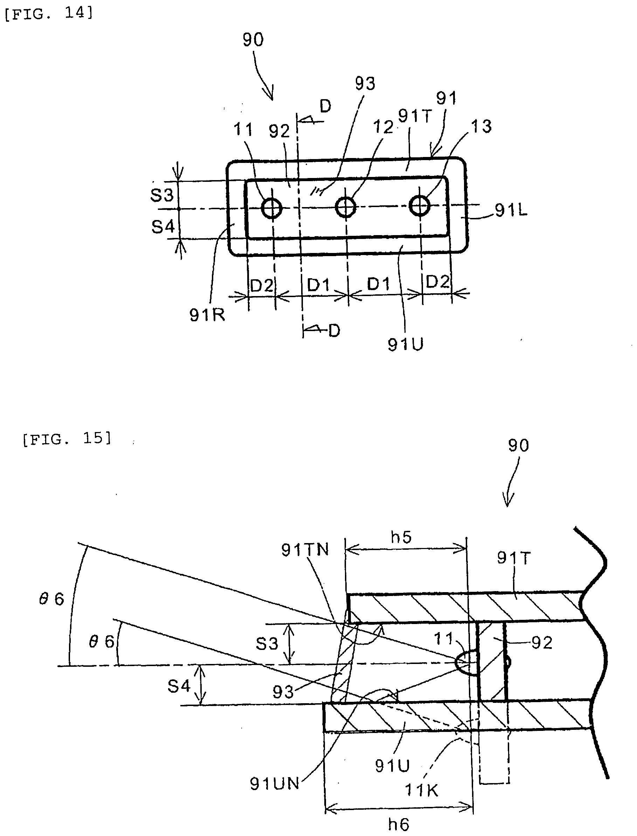

Fig. 13 is a perspective view of a light 90 according to a second embodiment of the present invention. Fig. 14 is a front view of the light 90, and Fig. 15 is a sectional view taken along the line D-D of Fig. 14.

The light 90 is configured such that a board 92, in which light sources 11, 12, and 13 are arranged in a matrix of one row by three columns, is held in a housing 91. The housing 91 is formed of an upper side wall portion 91T, a lower side wall portion 91U, a left side wall portion 91L, a right side wall portion 91R which are provided to surround the four sides of the board 92, and a rear side wall portion (not shown). The upper side wall portion 91T and the lower side wall portion 91U form two horizontal surfaces facing each other vertically, and the left side wall portion 91L and the right side wall portion 91R form two vertical surfaces facing each other horizontally, thereby forming a shape like a rectangular solid which is partly cut off at a plane orthogonal to the left side wall portion 91L and the right side wall portion 91R.

On the front side of the body of the housing 91, a colourless or coloured transparent cover lens 93 is attached. Note that a wire 95 which supplies power supply to the light sources is attached in the rear side wall portion of the housing 91.

In the light 90, inner wall surfaces of parts projecting in the direction of radiation of the light sources from edge surfaces of the board 92 in the four wall portions 91T, 91U, 91L, and 91R are reflective surfaces 91TN, 91UN, 91LN (not shown), and 91RN (not shown), which reflect light. The board 92 is arranged to be orthogonal to the four wall portions. In this embodiment, the lengths of the two reflective surfaces vertically facing each other differ in such a way that a distance h6 between an edge of the reflective surface 91UN on the lower side and the light source is set to be greater than a distance h5 between an edge of the reflective surface 91TN on the upper side and the light source.

In the board 92, the light sources 11, 12, and 13 formed of a total of three light-emitting diodes are arrayed in a matrix of one row by three columns. The light sources in the same row are arranged at equal intervals each having a distance D1, and a distance between the light sources at each of the ends of the row and their adjacent reflective surface is a distance D2. A distance between the reflective surface 91TN and each light source on the upper side is a distance S3, and a distance between the reflective surface 91UN and each light source on the lower side is a distance S4. Note that, in this embodiment, the distance S3 and the distance S4 are set to be the same.

The light 90 according to this embodiment is configured such that both the actual images of the light sources 11, 12, and 13 and the reflected images thereof can be seen when seen from a position diagonally above where an angle formed by the light 90 and thy viewpoint of the viewer is an angle θ6. In order to achieve this, the distance h6 is set to be S3 or greater and h5 or greater. This is because an angle α at which the actual image cannot be seen is arctan (S3/h5) or greater and an angle β at which the reflected image can be seen is arctan(S4/h6) or greater, when the light 90 is seen diagonally from above.

Further, in the light 90 according to this embodiment, an angle at which the viewer frequently looks down on the light 90 is set to 30 degrees, and it is configured such that both of the actual images and the reflected images of the light sources 11, 12, and 13 can reliably be seen at this time. In order to achieve this, the distance h5 is set to be S3 × (√3) or less, and the distance h6 is set to be S4 × (√3) or greater. The distance h6 is set to be S4 × (√3) or greater because arctan(S4/h6) is then 30 degrees or less. In order that the actual image of the light source can also be seen at this time, the distance h5 is set to be S3 × (√3) or less so that arctan (S3/h5) is 30 degrees or greater.

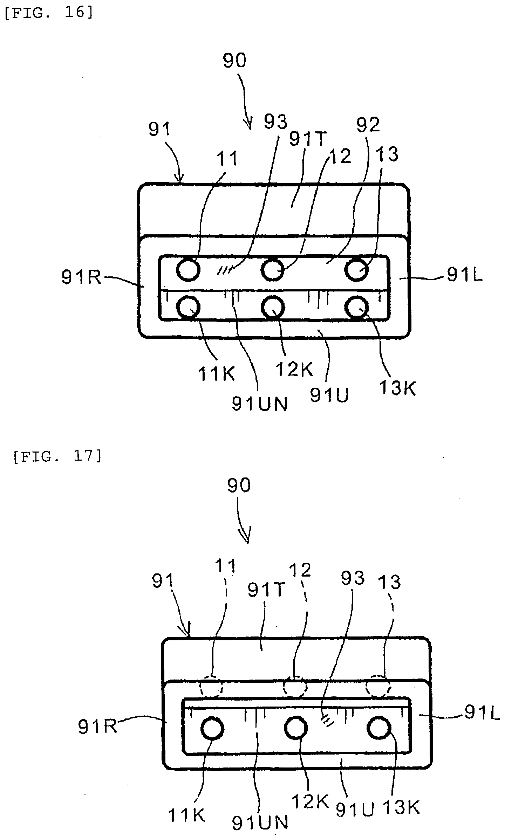

Fig. 16 is a perspective view showing how the light 90 is seen from a position diagonally above where the angle formed by the light 90 and the viewpoint of the viewer is the angle θ6 (30 degrees in this embodiment). In this case, the light sources 11, 12, and 13 can be seen, not only as actual images but also as reflected images 11K, 12K, and 13K, by being reflected on the reflective surface 91UN of the lower side wall portion 91U. Thereby, it appears to the viewer of the light 90 as though the number of light sources is six, which is twice the number arranged in the board.

Fig. 17 is a perspective view showing how the light 90 is seen from a position where the angle formed by the light 90 and the viewpoint of the viewer is greater than the angle θ6. In this case, the light sources 11, 12, and 13 are hidden by the upper side wall portion 91T and cannot be seen directly. However, since the reflected images 11K, 12K, and 13K can be seen as reflections from the reflective surface 91UN, it appears to the viewer of the light 90 as though the number of light sources is three, which is the same number arranged in the board.

As described above, since the viewability considerably increases when the light 90 according to the second embodiment of the present invention is seen diagonally from above, the viewability to an occupant of a following vehicle can particularly be improved when the light is attached to the vicinity of a tail lamp device or the like, as shown in Fig. 1. Note that the light 90 may be attached to the front side of the vehicle body or the like of the motorcycle 1 (see Fig. 1). For example, by attaching the light 90 to the middle body portion or the like of the front fork 3 while the radiation direction of the light source is directed toward the front side of the vehicle body, the inclination angle of an opening of the housing 91 approximates the inclination angle of the front fork 3. Thereby, the light 90 can be arranged without a sense of discomfort in design.

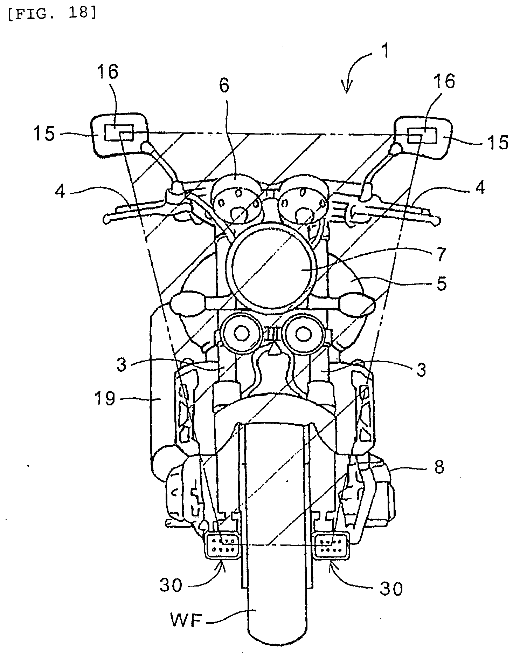

Fig. 18 is a front view of a motorcycle 1 to which the light 30 according to the present invention is mounted. Position lamps 16 of the vehicle width or the like are attached to a pair of left and right rear view mirrors 15 of the motorcycle 1 so that the direction of radiation therefrom may be directed toward the front side of the vehicle body. In the example shown in the drawing, a pair of left and right lights 30 according to the above-described first embodiment are arranged at lower end portions of the front forks 3. With such arrangement positions of the lights 30, the two position lamps 16 on the vehicle body upper side and the two lights 30 on the vehicle body lower side are arranged as four vertices forming a trapezoid (shaded portion in the drawing). Accordingly, radiation points of the lamps are dispersed in the vehicle-width direction and the vertical direction of the vehicle body, thereby improving the viewability of the motorcycle 1 for an occupant of another vehicle, a pedestrian, and the like.

Note that various modifications are possible regarding the arranged numbers and arrangement positions of the light 30 according to the first embodiment and the light 90 according to the second embodiment. For example, the light 90 according to the second embodiment may be arranged in the position of the light 30 shown in Fig. 18.

Note that the attachment position and attachment angle of the light to the vehicle body, the shape and material of the housing of the light, the shape and dimensional ratio of the wall portion of the housing, the number and arrangement of the light sources, the shape and arrangement of the board, and the like are not limited to those of the embodiment described above, and various modifications are possible. For example, a light which is long in the vertical direction may be formed by arranging the light sources with a greater number of rows than the number of columns. Also, the light as shown in the second embodiment may be used with the light sources arranged in the vertical direction in three rows by one column. Further, the housing of the light is not limited to a quadrangle shown in the embodiments described above, and may be formed as a polygon such as a hexagon.

## Claims

1. A vehicle light (30; 40; 50; 90) comprising:
a planar board (32; 42; 52; 92) in which a plurality of light sources (11, 12, 13, 14, 21, 22, 23, 24; 11, 12, 13) are arranged in a matrix;
the vehicle light further comprises planar wall portions (31T, 31R, 31U, 31L; 41T, 41R, 41U, 41L; 51T, 51R, 51U, 51L; 91T, 91R, 91U, 91L) which are arranged to project from edge surfaces of the board (32; 42; 52; 92) in a direction of radiation of the light sources (11, 12, 13, 14, 21, 22, 23, 24; 11, 12, 13) to form a housing of constant cross-section surrounding the board (32; 42; 52; 92);
**characterized in that** at least one of the wall portions (31T, 31R, 31U, 31L; 41T, 41R, 41U, 41L; 51T, 51R, 51U, 51L; 91T, 91R, 91U, 91L) has a reflective surface (31TN, 31RN, 31UN, 31LN; 41TN, 41RN, 41UN, 41LN; 51TN, 51RN, 51UN, 51LN; 91TN, 91RN, 91UN, 91LN) on a side facing the light sources (11, 12, 13, 14, 21, 22, 23, 24; 11, 12, 13);
wherein a second wall portion (31T, 31R, 31U, 31L; 41T, 41R, 41U, 41L; 51T, 51R, 51U, 51L; 91T, 91R, 91U, 91L) is arranged opposite the said at least one wall portion (31T, 31R, 31U, 31L; 41T, 41R, 41U, 41L; 51T, 51R, 51U, 51L; 91T, 91R, 91U, 91L), and has a reflective surface (31TN, 31RN, 31UN, 31LN; 41TN, 41RN, 41UN, 41LN; 51TN, 51RN, 51UN, 51LN; 91TN, 91RN, 91UN, 91LN) on a side facing the light sources (11, 12, 13, 14, 21, 22, 23, 24; 11, 12, 13);
and wherein the matrix of light sources (11, 12, 13, 14, 21, 22, 23, 24; 11, 12, 13) and the planar wall portions (31T, 31R, 31U, 31L; 41T, 41R, 41U, 41L; 51T, 51R, 51U, 51L; 91T, 91R, 91U, 91L) are arranged such that when light from the light sources (11, 12, 13, 14, 21, 22, 23, 24; 11, 12, 13) nearest to the second wall portion (31T, 31R, 31U, 31L; 41T, 41R, 41U, 41L; 51T, 51R, 51U, 51L; 91T, 91R, 91U, 91L) is prevented by the second wall portion (31T, 31R, 31U, 31L; 41T, 41R, 41U, 41L; 51T, 51R, 51U, 51L; 91T, 91R, 91U, 91L) from directly reaching an observer, light from the light sources (11, 12, 13, 14, 21, 22, 23, 24; 11, 12, 13) nearest to the said at least one wall portion (31T, 31R, 31U, 31L; 41T, 41R, 41U, 41L; 51T, 51R, 51U, 51L; 91T, 91R, 91U, 91L) can be reflected from the said at least one wall portion (31T, 31R, 31U, 31L; 41T, 41R, 41U, 41L; 51T, 51R, 51U, 51L; 91T, 91R, 91U, 91L) to thereby reach the observer.

2. The vehicle light (30; 40; 50) according to claim 1,
wherein the light sources (11, 12, 13, 14, 21, 22, 23, 24) are arrayed in a matrix of m rows by N columns, and
said reflective surfaces (31TN, 31RN, 31UN, 31 LN; 41TN, 41 RN, 41UN, 41LN; 51TN, 51RN, 51UN, 51LN) are formed of two horizontal surfaces (31TN, 31UN; 41TN, 41UN; 51TN, 51UN) which vertically face each other in a row direction of the matrix, and two vertical surfaces (31RN, 31LN; 41RN, 41LN; 51RN, 51LN) which horizontally face each other in a column direction of the matrix.

3. The vehicle light (30; 40; 50) according to claim 2, wherein, when the light sources (11, 12, 13, 14, 21, 22, 23, 24) in each row are arranged at equal intervals each having a distance D1 and when a distance between each of the light sources at both row ends (11, 14, 21, 24) and the reflective surface adjacent thereto (31RN, 31LN; 41RN, 41LN; 51RN, 51LN) is a distance D2, the distance D2 is set to not less than (1/3) × D1 and not more than (2/3) × D1.

4. The vehicle light (30; 40; 50) according to claim 2 or claim 3, wherein, when the light sources (11, 12, 13, 14, 21, 22, 23, 24) in each column are arranged at equal intervals each having a distance S1 and when a distance between each of the light sources at both column ends (11, 12, 13, 14, 21, 22, 23, 24) and the reflective surface adjacent thereto (31TN, 31UN; 41TN, 41UN; 51TN, 51UN) is a distance S2, the distance S2 is set to not less than (1/3) × S1 and not more than (2/3) × S1.

5. The vehicle light (30; 40; 50) according to any of claims 2 to 4, wherein, when the light sources (11, 12, 13, 14, 21, 22, 23, 24) in each row are arranged at equal intervals each having a distance D1 and when a distance between each of the light sources at both column ends (11, 12, 13, 14, 21, 22, 23, 24) and the reflective surface adjacent thereto (31TN, 31UN; 41TN, 41UN; 51TN, 51UN) is a distance S2, the distance S2 is set to not less than (1/3) × D1 and not more than (2/3) × D1.

6. The vehicle light (30; 40; 50) according to any of claims 2 to 5, wherein, when the light sources (11, 12, 13, 14, 21, 22, 23, 24) in each column are arranged at equal intervals each having a distance S1 and when a distance between each of the light sources at both row ends (11, 14, 21, 24) and the reflective surface adjacent thereto (31RN, 31LN; 41RN, 41LN; 51RN, 51LN) is a distance D2, the distance D2 is set to not less than (1/3) × S1 and not more than (2/3) × S1.

7. The vehicle light according to any of claims 2 to 6, wherein a distance between an edge of the reflective surface of one of the vertical surfaces (31RN, 31LN; 41RN, 41LN; 51RN, 51LN) and the light sources (11, 12, 13, 14, 21, 22, 23, 24) differs from a distance between an edge of the reflective surface of the other one of the vertical surfaces (31RN, 31LN; 41N, 41LN; 51RN, 51LN) and the light sources (11, 12, 13, 14, 21, 22, 23, 24).

8. The vehicle light (40; 50) according to claim 7, wherein the board (42; 52) is arranged to be inclined with respect to the two vertical surfaces (41RN, 41LN; 51RN, 51LN).

9. A vehicle light as claimed in claim 1,
wherein four planar wall portions (91T, 91R, 91U, 91L) are provided to surround the board;
wherein the light sources (11, 12, 13) are arranged in a matrix of one row by N columns,
wherein the reflective surfaces (91TN, 91RN, 91UN, 91LN) are formed of two horizontal surfaces (91TN, 91UN) which vertically face each other in a row direction of the matrix and two vertical surfaces (91RN, 91LN) which horizontally face each other in a column direction of the matrix,
wherein the board (92) is arranged to be substantially orthogonal to the reflective surfaces (91TN, 91RN, 91UN, 91LN), and
wherein when a distance between an edge of an upper one of the horizontal reflective surfaces (91TN) and the light sources (11, 12, 13) is a distance h5, when a distance between an edge of a lower one (91UN) of the horizontal reflective surfaces and the light sources (11, 12, 13) is a distance h6, when a distance between the upper reflective surface (91TN) and the light sources (11, 12, 13) is a distance S3, and when a distance between the lower reflective surface (91UN) and the light sources (11, 12, 13) is a distance S4, the distance h6 is set to not less than S3 and h5, the horizontal reflective surfaces (91TN, 91UN) vertically facing each other.

10. The vehicle light (90) according to claim 9,
wherein the distance h5 is set to not more than S3 × (√3), and the distance h6 is set to not less than S4 × (√3).

## Patentansprüche

1. Fahrzeuglicht (30; 40; 50; 90), umfassend:
eine ebene Platte (32; 42; 52; 92), in der eine Vielzahl von Lichtquellen (11, 12, 13, 14, 21, 22, 23, 24; 11, 12, 13) in einer Matrix angeordnet sind;
das Fahrzeuglicht umfasst weiter ebene Wandabschnitte (31T, 31R, 31U, 31L; 41T, 41R, 41U, 41L; 51T, 51R, 51U, 51L; 91T, 91R, 91U, 91L), die angeordnet sind, um von Kantenoberflächen der Platte (32; 42; 52; 92) in eine Ausstrahlungsrichtung der Lichtquellen (11, 12, 13, 14, 21, 22, 23, 24; 11, 12, 13) hervorzustehen, um ein Gehäuse mit konstantem Querschnitt auszubilden, das die Platte (32; 42; 52; 92) umgibt;
**dadurch gekennzeichnet, dass**
mindestens einer der Wandabschnitte (31T, 31R, 31U, 31L; 41T, 41R, 41U, 41L; 51T, 51R, 51U, 51L; 91T, 91R, 91U, 91L) eine reflektierende Oberfläche (31TN, 31RN, 31UN, 31LN; 41TN, 41RN, 41UN, 41LN; 51TN, 51RN, 51UN, 51LN; 91TN, 91RN, 91UN, 91LN) auf einer den Lichtquellen (11, 12, 13, 14, 21, 22, 23, 24; 11, 12, 13) zugewandten Seite aufweist;
wobei ein zweiter Wandabschnitt (31T, 31R, 31U, 31L; 41T, 41R, 41U, 41L; 51T, 51R, 51U, 51L; 91T, 91R, 91U, 91L) gegenüberliegend dem mindestens einen Wandabschnitt (31T, 31R, 31U, 31L; 41T, 41R, 41U, 41L; 51T, 51R, 51U, 51L; 91T, 91R, 91U, 91L) angeordnet ist und eine reflektierende Oberfläche (31TN, 31RN, 31UN, 31LN; 41TN, 41RN, 41UN, 41LN; 51TN, 51RN, 51UN, 51LN; 91TN, 91RN, 91UN, 91LN) auf einer den Lichtquellen (11, 12, 13, 14, 21,22, 23, 24; 11, 12, 13) zugewandten Seite aufweist;
und wobei die Matrix von Lichtquellen (11, 12, 13, 14, 21, 22, 23, 24; 11, 12, 13) und die ebenen Wandabschnitte (31T, 31R, 31U, 31L; 41T, 41R, 41U, 41L; 51T, 51R, 51U, 51L; 91T, 91R, 91U, 91L) dergestalt angeordnet sind, dass, wenn Licht von den Lichtquellen (11, 12, 13, 14, 21, 22, 23, 24; 11, 12, 13) am nächsten dem zweiten Wandabschnitt (31T, 31R, 31U, 31L; 41T, 41R, 41U, 41L; 51T, 51R, 51U, 51L; 91T, 91R, 91U, 91L) durch den zweiten Wandabschnitt (31T, 31R, 31U, 31L; 41T, 41R, 41U, 41L; 51T, 51R, 51U, 51L; 91T, 91R, 91U, 91L) daran gehindert wird, einen Betrachter direkt zu erreichen, Licht von den Lichtquellen (11, 12, 13, 14, 21, 22, 23, 24; 11, 12, 13) am nächsten dem mindestens einen Wandabschnitt (31T, 31R, 31U, 31L; 41T, 41R, 41U, 41L; 51T, 51R, 51U, 51L; 91T, 91R, 91U, 91L) von dem mindestens einen Wandabschnitt (31T, 31R, 31U, 31L; 41T, 41R, 41U, 41L; 51T, 51R, 51U, 51L; 91T, 91R, 91U, 91L) reflektiert werden kann, um dadurch den Betrachter zu erreichen.

2. Fahrzeuglicht (30; 40; 50) nach Anspruch 1,
wobei die Lichtquellen (11, 12, 13, 14, 21, 22, 23, 24) in einer Matrix von m Reihen mal N Spalten als Array angeordnet sind, und
die reflektierenden Oberflächen (31TN, 31RN, 31UN, 31LN; 41TN, 41RN, 41UN, 41LN; 51TN, 51RN, 51UN, 51LN) aus zwei horizontalen Oberflächen (31TN, 31UN; 41TN, 41UN; 51TN, 51UN), welche vertikal in eine Reihenrichtung der Matrix einander zugewandt sind, und aus zwei vertikalen Oberflächen (31RN, 31LN; 41RN, 41LN; 51RN, 51LN) ausgebildet sind, die horizontal in eine Spaltenrichtung der Matrix einander zugewandt sind.

3. Fahrzeuglicht (30; 40; 50) nach Anspruch 2, wobei, wenn die Lichtquellen (11, 12, 13, 14, 21, 22, 23, 24) in jeder Reihe in gleichmäßigen Intervallen, die jeweils einen Abstand D1 aufweisen, angeordnet sind, und wenn ein Abstand zwischen jeder der Lichtquellen an beiden Reihenenden (11, 14, 21, 24) und der danebenliegenden reflektierenden Oberfläche (31RN, 31LN; 41RN, 41LN; 51RN, 51LN) ein Abstand D2 ist, der Abstand D2 auf nicht weniger als (1/3) x D1 und nicht mehr als (2/3) x D1 eingestellt ist.

4. Fahrzeuglicht (30; 40; 50) nach Anspruch 2 oder Anspruch 3, wobei, wenn die Lichtquellen (11, 12, 13, 14, 21, 22, 23, 24) in jeder Spalte in gleichmäßigen Intervallen, die jeweils einen Abstand S1 aufweisen, angeordnet sind, und wenn ein Abstand zwischen jeder der Lichtquellen an beiden Spaltenenden (11, 12, 13, 14, 21, 22, 23, 24) und der danebenliegenden reflektierenden Oberfläche (31TN, 31UN; 41TN, 41UN; 51TN, 51UN) ein Abstand S2 ist, der Abstand S2 auf nicht weniger als (1/3) x S1 und nicht mehr als (2/3) x S1 eingestellt ist.

5. Fahrzeuglicht (30; 40; 50) nach einem der Ansprüche 2 bis 4, wobei, wenn die Lichtquellen (11, 12, 13, 14, 21, 22, 23, 24) in jeder Reihe in gleichmäßigen Intervallen, die jeweils einen Abstand D1 aufweisen, angeordnet sind, und wenn ein Abstand zwischen jeder der Lichtquellen an beiden Spaltenenden (11, 12, 13, 14, 21, 22, 23, 24) und der danebenliegenden reflektierenden Oberfläche (31TN, 31UN; 41TN, 41UN; 51TN, 51UN) ein Abstand S2 ist, der Abstand S2 auf nicht weniger als (1/3) x D1 und nicht mehr als (2/3) x D1 eingestellt ist.

6. Fahrzeuglicht (30; 40; 50) nach einem der Ansprüche 2 bis 5, wobei, wenn die Lichtquellen (11, 12, 13, 14, 21, 22, 23, 24) in jeder Spalte in gleichmäßigen Intervallen, die jeweils einen Abstand S1 aufweisen, angeordnet sind, und wenn ein Abstand zwischen jeder der Lichtquellen an beiden Reihenenden (11, 14, 21, 24) und der danebenliegenden reflektierenden Oberfläche (31RN, 31LN; 41RN, 41LN; 51RN, 51LN) ein Abstand D2 ist, der Abstand D2 auf nicht weniger als (1/3) x S1 und nicht mehr als (2/3) x S1 eingestellt ist.

7. Fahrzeuglicht nach einem der Ansprüche 2 bis 6, wobei ein Abstand zwischen einer Kante der reflektierenden Oberfläche von einer der vertikalen Oberflächen (31RN, 31LN; 41RN, 41LN; 51RN, 51LN) und den Lichtquellen (11, 12, 13, 14, 21,22, 23, 24) von einem Abstand zwischen einer Kante der reflektierenden Oberfläche der anderen der vertikalen Oberflächen (31RN, 31LN; 41RN, 41LN; 51RN, 51LN) und den Lichtquellen (11, 12, 13, 14, 21,22, 23, 24) abweicht.

8. Fahrzeuglicht (40; 50) nach Anspruch 7, wobei die Platte (42; 52) angeordnet ist, um im Verhältnis zu den beiden vertikalen Oberflächen (41RN, 41LN; 51RN, 51LN) geneigt zu sein.

9. Fahrzeuglicht nach Anspruch 1,
wobei vier ebene Wandabschnitte (91T, 91R, 91U, 91L) bereitgestellt werden, um die Platte zu umgeben;
wobei die Lichtquellen (11, 12, 13) in einer Matrix von einer Reihe mal N Spalten angeordnet sind,
wobei die reflektierenden Oberflächen (91TN, 91RN, 91UN, 91LN) aus zwei horizontalen Oberflächen (91TN, 91UN), welche in eine Reihenrichtung der Matrix einander vertikal zugewandt sind, und zwei vertikalen Oberflächen (91RN, 91LN), die in eine Spaltenrichtung der Matrix einander horizontal zugewandt sind,
wobei die Platte (92) im Wesentlichen orthogonal zu den reflektierenden Oberflächen (91TN, 91RN, 91UN, 91LN) angeordnet ist, und
wobei, wenn ein Abstand zwischen einer Kante einer oberen der horizontalen reflektierenden Oberflächen (91TN) und den Lichtquellen (11, 12, 13) ein Abstand h5 ist, wenn ein Abstand zwischen einer Kante einer unteren (91UN) der horizontalen reflektierenden Oberflächen und den Lichtquellen (11, 12, 13) ein Abstand h6 ist, wenn ein Abstand zwischen der oberen reflektierenden Oberfläche (91TN) und den Lichtquellen (11, 12, 13) ein Abstand S3 ist, und wenn ein Abstand zwischen der unteren reflektierenden Oberfläche (91UN) und den Lichtquellen (11, 12, 13) ein Abstand S4 ist, der Abstand h6 auf nicht weniger als S3 und h5 eingestellt ist, wobei die horizontalen reflektierenden Oberflächen (91TN, 91UN) einander vertikal zugewandt sind.

10. Fahrzeuglicht (90) nach Anspruch 9,
wobei der Abstand h5 auf nicht mehr als S3 x (√3) eingestellt ist, und der Abstand h6 auf nicht weniger als S4 x (√3) eingestellt ist.

## Revendications

1. Phare de véhicule (30 ; 40 ; 50 ; 90) comprenant :
un tableau planaire (32; 42; 52; 92) dans lequel sont agencées en réseau une pluralité de sources de lumière (11, 12, 13, 14, 21, 22, 23, 24 ; 11, 12, 13) ;
le phare de véhicule comprenant en outre des parties de paroi planaires (31T, 31R, 31U, 31L; 41T, 41R, 41U, 41L; 51T, 51R, 51U, 51L; 91T, 91R, 91U, 91L) qui sont agencées pour faire saillie de surfaces de bord du tableau (32; 42 ; 52 ; 92) dans une direction de rayonnement des sources de lumière (11, 12, 13, 14, 21, 22, 23, 24 ; 11, 12, 13) afin de former un boîtier de section transversale constante entourant le tableau (32 ; 42; 52 ; 92) ;
**caractérisé en ce qu'**au moins l'une des parties de paroi (31T, 31R, 31U, 31L ; 41T, 41R, 41U, 41L; 51T, 51R, 51U, 51L; 91T, 91R, 91U, 91L) a une surface réfléchissante (31TN, 31RN, 31UN, 31LN ; 41TN, 41RN, 41UN, 41LN ; 51TN, 51RN, 51UN, 51LN ; 91TN, 91RN, 91UN, 91LN) sur un côté en regard des sources de lumière (11, 12, 13, 14, 21, 22, 23, 24 ; 11, 12, 13) ;
dans lequel une seconde partie de paroi (31T, 31R, 31U, 31L; 41T, 41R, 41U, 41L; 51T, 51R, 51U, 51L; 91T, 91R, 91U, 91L) est agencée à l'opposé de ladite au moins une partie de paroi (31T, 31R, 31U, 31L; 41T, 41R, 41U, 41L; 51T, 51R, 51U, 51L; 91T, 91R, 91U, 91L) et a une surface réfléchissante (31TN, 31RN, 31UN, 31LN ; 41TN, 41RN, 41UN, 41LN ; 51TN, 51RN, 51UN, 51LN ; 91TN, 91RN, 91UN, 91LN) sur un côté en regard des sources de lumière (11, 12, 13, 14, 21, 22, 23, 24 ; 11, 12, 13) ;
dans lequel le réseau de sources de lumière (11, 12, 13, 14, 21, 22, 23, 24 ; 11, 12, 13) et les parties de paroi planaires (31T, 31R, 31U, 31L; 41T, 41R, 41U, 41L; 51T, 51R, 51U, 51L; 91T, 91R, 91U, 91L) sont agencés en sorte que, lorsque la lumière issue des sources de lumière (11, 12, 13, 14, 21, 22, 23, 24; 11, 12, 13) la plus proche de la seconde partie de paroi (31T, 31R, 31U, 31L; 41T, 41R, 41U, 41L; 51T, 51R, 51U, 51L; 91T, 91R, 91U, 91L) est empêchée par la seconde partie de paroi (31T, 31R, 31U, 31L ; 41T, 41R, 41U, 41L; 51T, 51R, 51U, 51L; 91T, 91R, 91U, 91L) d'atteindre directement un observateur, la lumière issue des sources de lumière (11, 12, 13, 14, 21, 22, 23, 24; 11, 12, 13) la plus proche de ladite au moins une partie de paroi (31T, 31R, 31U, 31L; 41T, 41R, 41U, 41L ; 51T, 51R, 51U, 51L; 91T, 91R, 91U, 91L) peut être réfléchie par ladite au moins une partie de paroi (31T, 31R, 31U, 31L; 41T, 41R, 41U, 41L; 51T, 51R, 51U, 51L; 91T, 91R, 91U, 91L) pour ainsi atteindre l'observateur.

2. Phare de véhicule (30 ; 40 ; 50) selon la revendication 1,
dans lequel les sources de lumière (11, 12, 13, 14, 21, 22, 23, 24) sont agencées en réseau de m rangées par N colonnes et
lesdites surfaces réfléchissantes (31TN, 31RN, 31UN, 31LN ; 41TN, 41RN, 41UN, 41LN ; 51TN, 51RN, 51UN, 51LN) sont formées de deux surfaces horizontales (31TN, 31UN ; 41TN, 41UN ; 51TN, 51UN) qui se font face verticalement l'une l'autre dans une direction de rangée du réseau et de deux surfaces verticales (31RN, 31LN ; 41RN, 41LN ; 51RN, 51LN) qui se font face horizontalement l'une l'autre dans une direction de colonne du réseau.

3. Phare de véhicule (30; 40; 50) selon la revendication 2, dans lequel, lorsque les sources de lumière (11, 12, 13, 14, 21, 22, 23, 24) de chaque rangée sont agencées à intervalles égaux ayant chacun une distance D1 et lorsqu'une distance entre chacune des sources de lumière aux deux extrémités des rangées (11, 14, 21, 24) et la surface réfléchissante qui leur est adjacente (31RN, 31LN ; 41RN, 41LN ; 51RN, 51LN) est une distance D2, la distance D2 est réglée pour ne pas être inférieure à (1/3) x D1 et pas supérieure à (2/3) x D1.

4. Phare de véhicule (30; 40; 50) selon la revendication 2 ou la revendication 3, dans lequel, lorsque les sources de lumière (11, 12, 13, 14, 21, 22, 23, 24) de chaque colonne sont agencées à intervalles égaux ayant chacun une distance S1 et lorsqu'une distance entre chacune des sources de lumière aux deux extrémités de colonne (11, 12, 13, 14, 21, 22, 23, 24) et la surface réfléchissante qui leur est adjacente (31TN, 31UN ; 41TN, 41UN ; 51TN, 51UN) est une distance S2, la distance S2 est réglée de manière à ne pas être inférieure à (1/3) x S1 et pas supérieure à (2/3) x S1.

5. Phare de véhicule (30 ; 40 ; 50) selon l'une quelconque des revendications 2 à 4, dans lequel, lorsque les sources de lumière (11, 12, 13, 14, 21, 22, 23, 24) de chaque rangée sont agencées à intervalles égaux ayant chacun une distance D1 et lorsqu'une distance entre chacune des sources de lumière aux deux extrémités de colonne (11, 12, 13, 14, 21, 22, 23, 24) et la surface réfléchissante qui leur est adjacente (31TN, 31UN ; 41TN, 41UN ; 51TN, 51UN) est une distance S2, la distance S2 est réglée de manière à ne pas être inférieure à (1/3) x D1 et pas supérieure à (2/3) x D1.

6. Phare de véhicule (30 ; 40 ; 50) selon l'une quelconque des revendications 2 à 5, dans lequel, lorsque les sources de lumière (11, 12, 13, 14, 21, 22, 23, 24) de chaque colonne sont agencées à intervalles égaux ayant chacun une distance S1 et lorsqu'une distance entre chacune des sources de lumière aux deux extrémités de rangée (11, 14, 21, 24) et la surface réfléchissante qui leur est adjacente (31RN, 31LN ; 41RN, 41LN ; 51RN, 51LN) est une distance D2, la distance D2 est réglée de manière à ne pas être inférieure à (1/3) x S1 et pas supérieure à (2/3) x S1.

7. Phare de véhicule selon l'une quelconque des revendications 2 à 6, dans lequel une distance entre un bord de la surface réfléchissante de l'une des surfaces verticales (31RN, 31LN ; 41RN, 41LN ; 51RN, 51LN) et les sources de lumière (11, 12, 13, 14, 21, 22, 23, 24) diffère d'une distance entre un bord de la surface réfléchissante de l'autre des surfaces verticales (31RN, 31LN ; 41RN, 41LN ; 51RN, 51LN) et les sources de lumière (11, 12, 13, 14, 21, 22, 23, 24).

8. Phare de véhicule (40; 50) selon la revendication 7, dans lequel le tableau (42; 52) est agencé pour être incliné par rapport aux deux surfaces verticales (41RN, 41LN ; 51RN, 51LN).

9. Phare de véhicule selon la revendication 1,
dans lequel quatre parties de paroi planaires (91T, 91R, 91U, 91L) sont fournies pour entourer le tableau;
dans lequel les sources de lumière (11, 12, 13) sont agencées en réseau d'une rangée par N colonnes,
dans lequel les surfaces réfléchissantes (91TN, 91RN, 91UN, 91LN) sont formées de deux surfaces horizontales (91TN, 91UN) qui se font face verticalement l'une l'autre dans une direction de rangée du réseau et de deux surfaces verticales (91RN, 91LN) qui se font face l'une l'autre horizontalement dans une direction de colonne du réseau,
dans lequel le tableau (92) est agencé pour être sensiblement orthogonal aux surfaces réfléchissantes (91TN, 91RN, 91UN, 91LN) et
dans lequel, lorsqu'une distance entre un bord de l'une supérieure des surfaces réfléchissantes horizontales (91TN) et les sources de lumière (11, 12, 13) est une distance h5, lorsqu'une distance entre un bord d'une surface inférieure (91UN) des surfaces réfléchissantes horizontales et les sources de lumière (11, 12, 13) est une distance h6, lorsqu'une distance entre la surface réfléchissante supérieure (91TN) et les sources de lumière (11, 12, 13) est une distance S3 et lorsqu'une distance entre la surface réfléchissante inférieure (91UN) et les sources de lumière (11, 12, 13) est une distance S4, la distance h6 est réglée de manière à ne pas être inférieure à S3 et à h5, les surfaces réfléchissantes horizontales (91TN, 91UN) se faisant face l'une l'autre verticalement.

10. Phare de véhicule (90) selon la revendication 9,
dans lequel la distance h5 est réglée pour ne pas être supérieure à S3 x (√3) et
la distance h6 est réglée de manière à ne pas être inférieure à S4 x (√3).
